# EUROPÄISCHE PATENTANMELDUNG

(11) **EP 2 801 543 A1**
(43) Veröffentlichungstag der Anmeldung: **12.11.2014**
(21) Anmeldenummer: 14001262.6
(22) Anmeldetag: 05.04.2014
(51) Int. Cl.: B65H 63/032, B65H 71/00, G01V 8/16

(54) **Überwachung des Vorhandenseins eines Fadens**

(30) Priorität: 11.05.2013 DE 102013008111
(71) Anmelder: Saurer Germany GmbH & Co. KG, 42897 Remscheid (DE)
(72) Erfinder: Geisler, Robert, 41844 Wegberg (DE)
(74) Vertreter: Hamann, Arndt

(57) **Zusammenfassung**

Die Erfindung betrifft die Arbeitsstelle einer Textilmaschine aufweisend eine Spuleinrichtung (1) zur Herstellung einer Kreuzspule (2) mit einer Fadenverlegeeinrichtung (3) zur changierenden Verlegung eines Fadens (4) auf einer in der Spuleinrichtung (1) befindlichen Kreuzspule (2) und einen Fadenwächter (5) mit einer Lichtquelle (6) und einem lichtempfindlichen Empfänger (7), der das Vorhandensein des Fadens (4) an der Arbeitsstelle überwacht und so im Changierbereich (8) des Fadens (4) angeordnet ist, dass der changierende Faden (4) eine Lichtstrecke (11) zwischen der Lichtquelle (6) und dem Empfänger (7) schneidet, und es ist eine Auswerteeinheit (12) vorhanden, die die Unterbrechung der Lichtstrecke (12) durch den Faden (4) detektiert und anhand der wiederkehrenden Unterbrechung auf das Vorhandensein des Fadens (4) schließt. Erfindungsgemäß sind die Lichtquelle (6) und der Empfänger (7) auf einer Leiterkarte (13) angeordnet und es ist ein Lichtwellenleiter (14) vorhanden, der einen Lichtstrahl der Lichtquelle (6) in Richtung des Empfängers (7) umlenkt. Die Erfindung betrifft ferner einen entsprechenden Fadenwächter (5).

## Beschreibung

Die vorliegende Erfindung betrifft eine Arbeitsstelle einer Textilmaschine. Die Arbeitsstelle weist eine Spuleinrichtung zur Herstellung einer Kreuzspule mit einer Fadenverlegeeinrichtung zur changierenden Verlegung eines Fadens auf einer in der Spuleinrichtung befindlichen Kreuzspule auf. Die Arbeitsstelle weist ferner einen Fadenwächter auf, der zwei optoelektronische Bauteile, von denen eines als Lichtquelle und eines als lichtempfindlicher Empfänger ausgebildet ist, der das Vorhandensein des Fadens an der Arbeitsstelle überwacht und der so im Changierbereich des Fadens angeordnet ist, dass der changierende Faden in einem Messspalt eine Lichtstrecke zwischen der Lichtquelle und dem Empfänger schneidet, und es ist eine Auswerteeinheit vorhanden, die die Unterbrechung der Lichtstrecke durch den Faden detektiert und anhand der wiederkehrenden Unterbrechung auf das Vorhandensein des Fadens schließt. Die Erfindung betrifft ferner den Fadenwächter.

Die DE 10 2008 000 610 A1 offenbart eine Textilmaschine, insbesondere eine Rotorspinnmaschine, mit Sensoren zur Überwachung des Vorhandenseins des Garns an jeder Arbeitsstelle. Die Sensoren werden elektrisch beziehungsweise elektronisch angesteuert und ausgewertet. Die Überwachung kann dabei optisch mittels einer Lichtquelle und eines lichtempfindlichen Empfängers erfolgen. Die Lichtquelle ist ein optoelektronisches Bauteil, das die elektrische Energie in optische Energie umsetzt. Entsprechend ist der lichtempfindliche Empfänger ein optoelektronisches Bauteil, das das optische Signal in ein elektrisches Signal umwandelt. Der Faden wird bei diesen Sensoren stets im Strahlengang zwischen Lichtquelle und dem Empfänger geführt. Um dies zu ermöglichen, sind entsprechende Führungselemente vorhanden. Bekannte Sensoren zur Überwachung des Vorhandenseins des Fadens werten die Änderung des Lichtstromes aus, der durch den sich bewegenden Faden erzeugt wird, wie in der DE 38 03 751 A1 erläutert. Das heißt, die genaue Führung des Fadens im Strahlengang ist für die Funktionsfähigkeit des Sensors von enormer Bedeutung, so dass ein entsprechender Aufwand betrieben wird, um die genaue Führung des Fadens zu gewährleisten. Wenn der Faden aus der Führung ausfädelt, wird dies von dem Sensor als Fadenunterbrechung gewertet. Dies führt zu einem unnötigen Stillstand der Arbeitsstelle.

Bekannte Ausführungsformen von Fadenwächtern verfügen über zwei separate Leiterkarten für Lichtquelle und Empfänger. Es ist auch bekannt, eine einzelne Leiterkarte für die Lichtquelle und den Empfänger eines Fadenwächters zu verwenden. Allerdings weist eine solche bekannte Leiterkarte eine Aussparung für den Messspalt auf, was die Fertigung entsprechend aufwendig macht.

Im Zusammenhang mit Fadenwächtern ist es aus der DE 26 23 856 A1 und der DD 2 80 597 A1 bekannt, mittels Lichtleitern die Entfernung zwischen der Messstelle am Faden und der Leiterkarte zu überbrücken. Dabei ist sowohl der Lichtquelle als auch dem Empfänger jeweils ein Lichtleiter zugeordnet. Das führt zu zusätzlichen Übergängen zwischen verschiedenen Medien, die der Lichtstrahl passieren muss, und damit zu unerwünschten Verlusten.

Die DE 196 22 495 A1 offenbart einen Fadenwächter, bei dem Lichtleiter als Ersatz für einen Spiegel verwendet werden, um den Lichtstrahl mehrfach durch den Messspalt zu führen. Auch hier werden Übergänge zwischen verschiedenen Medien geschaffen, die zu Verlusten führen.

Aus der EP 2 479 130 A2 ist bekannt, optische Sensoren im Changierbereich des Fadens anzuordnen, die das abwechselnde Vorhandensein und Nichtvorhandensein des Fadens im Sensor detektieren. Diese Sensoren dienen in erster Linie dazu, Fehler in der Changierung zu detektieren. Ein solcher Sensor reagiert aber auch auf Fadenbrüche und sonstige Fadenunterbrechungen. Solche Sensoren können im Bereich der Umkehrpunkte angeordnet sein, oder in einem Zentralbereich der Changierung. Es ist die Möglichkeit offenbart, Transmissionssensoren zu verwenden, die eine U-förmige Anordnung erfordern, damit sich Lichtquelle und lichtempfindlicher Empfänger gegenüberstehen. Alternativ wird ein Reflektionssensor vorgeschlagen. Das heißt, Lichtquelle und Empfänger sind nebeneinander angeordnet und ein gegenüberliegender Reflektor mit einer diffus streuenden Oberfläche reflektiert das Licht teilweise zurück zum Em - pfänger. Reflektionssensoren sind aber wenig vorteilhaft, da sie empfindlicher gegen Umgebungslichteinflüsse sind.

Sensoren im Changierbereich des Fadens haben allerdings den Vorteil, dass der Faden nicht präzise in einem Messspalt des Fadenwächters geführt werden muss. Es wird hier nicht ein Fadenlaufsignal detektiert, das die geringen Ungleichmäßigkeiten im Faden widerspiegelt, sondern man macht sich zu Nutze, dass der Faden zur Ablage auf der Kreuzspule hin und her bewegt wird. Es wird der Durchtritt des Fadens durch die Lichtstrecke detektiert. Eine Führung des Fadens, die über die ohnehin vorhandene Führung zur Changierung des Fadens hinausgeht, ist nicht erforderlich. Solange der Faden vorhanden ist, muss der Faden die Lichtstrecke wiederkehrend im Abstand der Periodendauer der Changierung schneiden. Wenn der Durchtritt des Fadens ausbleibt, kann auf eine Fadenunterbrechung oder einen Changierfehler geschlossen werden. In beiden Fällen ist ein Stillsetzen der Arbeitsstelle erforderlich. Dennoch gestaltet sich der Sensor im Changierbereich konstruktiv nicht wesentlich einfacher, da für einen zuverlässigen Transmissionssensor eine ausgeprägte U-Form erforderlich ist. Das hat zwei separate Leiterkarten oder eine geformte einzelne Leiterkarte zur Folge.

Es ist daher die Aufgabe der vorliegenden Erfindung, eine konstruktiv einfache und trotzdem zuverlässige Möglichkeit zur Verfügung zu stellen, das Vorhandensein eines Fadens an einer Arbeitsstelle einer Kreuzspulen herstellenden Textilmaschine zu gewährleisten.

Zur Lösung der Aufgabe sind die zwei optoelektronischen Bauteile, nämlich die Lichtquelle und der Empfänger, auf einer Leiterkarte angeordnet und es ist ein Lichtwellenleiter vorhanden, der einen Lichtstrahl der Lichtquelle in Richtung des Empfängers umlenkt. Ferner grenzt das erste Ende des Lichtwellenleiters zur Übertragung eines Lichtstrahls an das erste optoelektronische Bauteil an, und das zweite Ende des Lichtwellenleiters und das zweite optoelektronische Bauteil grenzen so an den Messspalt an, dass ein Lichtstrahl zwischen dem zweiten Ende des Lichtwellenleiters und dem zweiten optoelektronischen Bauteil durch den Messspalt übertragen wird. Eine solche Konstruktion ermöglicht in Verbindung mit der Anordnung im Changierbereich eine einfache und preiswerte Ausführung eines Fadenwächters. Durch Verwendung eines Lichtwellenleiters kann eine einfache, vorzugsweise rechteckige, Leiterkarte verwendet werden. Die erfindungsgemäße Anordnung verhält sich annähernd wie ein Transmissionssensor, bei dem Lichtquelle und Empfänger gegenüberstehen und kann damit zuverlässig den Durchtritt des Fadens durch die Lichtstrecke detektieren. Die Zahl der Übergänge des Lichtstrahls zwischen verschiedenen Medien wird außerdem auf ein Minimum beschränkt, da nur ein einziger Lichtwellenleiter verwendet wird, der an einem Ende direkt an die Lichtquelle oder den Empfänger gekoppelt ist.

Es gibt grundsätzlich zwei alternative Ausführungsformen. Gemäß der ersten Ausführungsform bildet die Lichtquelle das erste optoelektronische Bauteil und der Empfänger das zweite optoelektronsiche Bauteil. Gemäß der zweiten Ausfürhungsform bildet der Empfänger das erste optoelektronische Bauteil und die Lichtquelle das zweite optoelektronische Bauteil. Die Positionen von Lichtquelle und Empfänger sind also austauschbar.

Gemäß einer weiteren bevorzugten Ausführungsform der erfindungsgemäßen Arbeitsstelle ist im Changierbereich des Fadens ein Paraffineur angeordnet, und der Fadenwächter ist mit dem Paraffineur verbunden. Im Changierbereich ist ohnehin häufig ein Paraffineur angeordnet. Der Fadenwächter kann somit einfach befestigt oder sogar in den Paraffineur integriert werden, ohne dass eine zusätzliche Haltevorrichtung erforderlich ist.

Neben der Arbeitsstelle betrifft die Erfindung außerdem einen Fadenwächter zur Überwachung des Vorhandenseins eines Fadens, bei dem die Lichtquelle und der Empfänger auf einer Leiterkarte angeordnet sind und ein Lichtwellenleiter vorhanden ist, der einen Lichtstrahl der Lichtquelle in Richtung des Empfängers umlenkt. Der Fadenwächter ist außerdem so aufgebaut, dass das erste Ende des Lichtwellenleiters zur Übertragung eines Lichtstrahls an das erste optoelektronische Bauteil angrenzt. Ferner grenzen das zweite Ende des Lichtwellenleiters und das zweite optoelektronische Bauteil so an einen Messspalt des Fadenwächters an, dass ein Lichtstrahl zwischen dem zweiten Ende des Lichtwellenwellenleiters und dem zweiten optoelektronischen Bauteil durch den Messspalt übertragen wird. Wie oben erläutert, ergibt sich so eine besonders einfache Konstruktion des Fadenwächters.

Gemäß der ersten Ausführungsform des erfindungsgemäßen Fadenwächters bildet die Lichtquelle das erste optoelektronische Bauteil und der Empfänger bildet das zweite optoelektronische Bauteil. Gemäß der zweiten Ausführungsform bildet der Empfänger das erste optoelektronische Bauteil und die Lichtquelle das zweite optoelektronische Bauteil.

Die Auswertung der Fadenwächtersignale kann in einer separaten Auswerteeinheit oder in dem Arbeitsstellenrechner erfolgen.

Vorteilhafterweise weist jedoch der Fadenwächter eine Auswerteeinheit auf, die die Unterbrechung einer Lichtstrecke zwischen Lichtquelle und Empfänger durch den Faden detektiert und anhand einer wiederkehrenden Unterbrechung auf das Vorhandensein des Fadens schließt. Die Auswerteeinheit ist vorzugsweise auf der gleichen Platine angeordnet, wie die Lichtquelle und der Empfänger.

Die Erfindung wird nachfolgend anhand eines in den Zeichnungen dargestellten Ausführungsbeispiels näher erläutert.

Es zeigen:
- Fig. 1: eine erfindungsgemäße Arbeitsstelle mit einer Spuleinrichtung;
- Fig. 2: einen Paraffineur mit einem integrierten Fadenwächter;
- Fig. 3: eine Schnittdarstellung eines Fadenwächters.

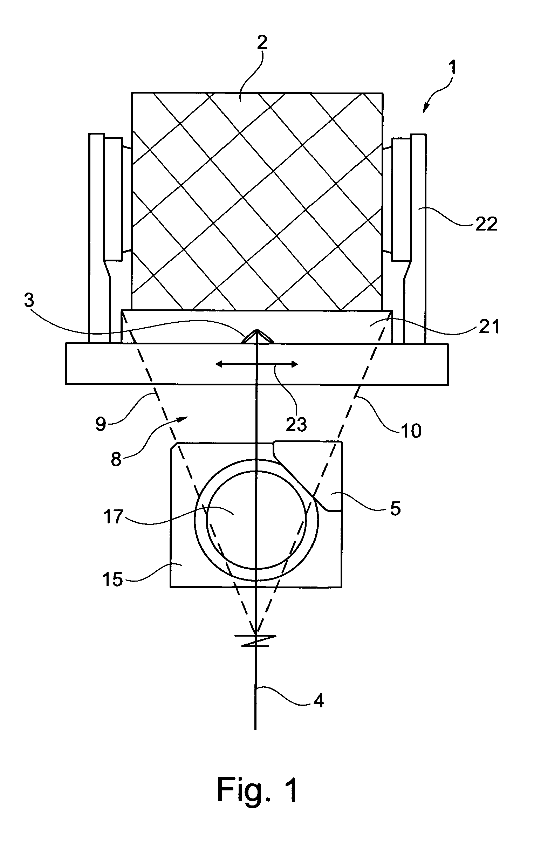

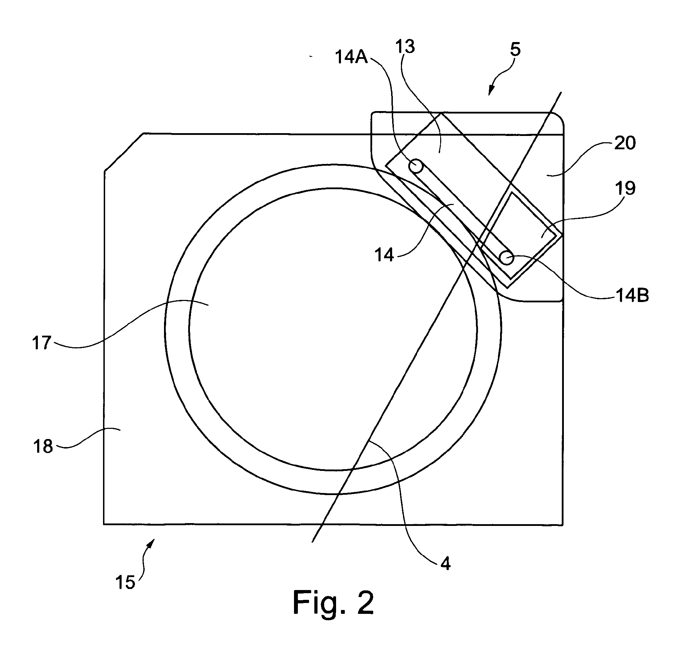

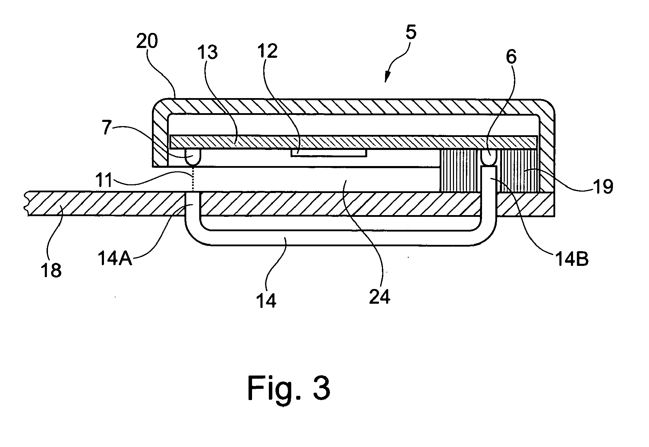

Die Fig. 1 zeigt eine Spuleinrichtung 1, wie sie sich an Arbeitsstellen von Rotorspinnmaschinen und Spulmaschinen findet. Die Spuleinrichtung 1 weist einen Spulenrahmen 22 auf, in dem eine Kreuzspule 2 drehbar gelagert gehalten wird. Die Kreuzspule 2 liegt im normalen Spul- beziehungsweise Spinnbetrieb auf einer Wickeltrommel 21 auf. Die Wickeltrommel 21 wird durch einen nicht dargestellten Antrieb angetrieben. Die Wickeltrommel 21 nimmt dabei die Kreuzspule 2 über Reibschluss mit und treibt diese an. Die Spuleinrichtung 1 weist ferner einen Fadenführer 3 auf, der in Richtung des Doppelpfeils 23 hin und her bewegt wird und den Faden 4 auf der Kreuzspule 2 ablegt. Die gestrichelten Linien 9 und 10 grenzen den Changierbereich 8 ab, in dem der Faden durch die Changierung des Fadenführers 3 hin und her bewegt wird. Die Changierung kann alternativ auch mittels einer Nutentrommel erfolgen. Wie an sich bekannt, ist im Changierbereich 8 ein Paraffineur 15 mit einer Paraffinrolle 17 angeordnet. Im Changierbereich 8 ist außerdem ein Fadenwächter 5 angeordnet. Der Fadenwächter 5 ist in den Paraffineur 15 integriert. Eine detailliertere Darstellung ist den Figuren 2 und 3 zu entnehmen.

In Fig. 2 ist das Gehäuse 20 des Fadenwächters 5 transparent dargestellt, um die Anordnung einiger Elemente des Fadenwächters 5 sichtbar zu machen. Es ist eine Leiterkarte 13, ein Lichtwellenleiter 14 mit den Enden 14A und 14B und eine trapezförmige Halterung 19 zu sehen. Die Halterung 19 ist so geformt und angeordnet, dass sie außerhalb des Changierbereiches 8 des Fadens 4 liegt. Der Faden 4 befindet sich in der Fig. 2 in seiner rechten äußeren Position, entsprechend der gestrichelten Linie 10 in der Fig. 1. Von dem Paraffineur 15 ist in der in Fig. 2 dargestellten Vorderansicht nur die Tür 18 und die Paraffinrolle 17 zu sehen. Die Tür 18 kann in bekannter Weise geschwenkt werden, um einen Austausch der Paraffinrolle zu ermöglichen.

Wie der Fig. 3 zu entnehmen ist, ist der Lichtwellenleiter 14 in die Tür 18 des Paraffineurs 15 eingelassen. Das Gehäuse 20 und die Halterung 19 sind ebenfalls an der Tür 18 befestigt. Die Leiterkarte 13 ist wiederum an der Halterung 19 befestigt. In der Fig. 3 sind nur die für die Erfindung wesentlichen Bauelemente angedeutet, die auf der Leiterkarte 13 angeordnet sind. Das sind die Lichtquelle 6, vorzugsweise ein Infrarot-Sender, der lichtempfindliche Empfänger 7, vorzugsweise ein Infrarot-Empfänger, und die Auswerteinheit 12. Die Verwendung von infrarotem Licht vermindert die Empfindlichkeit gegenüber dem Umgebungslicht. Zwischen der Tür 18 auf der einen und dem Gehäuse 20 und der Leiterkarte 13 auf der anderen Seite ergibt sich ein Messspalt 24. Die Lichtquelle 6 ist entfernt vom Messspalt 24 direkt gegenüber dem Ende 14B des Lichtwellenleiters 14 angeordnet, so dass Licht in den Lichtwellenleiter 14 eingekoppelt wird. Das Ende 14A des Lichtwellenleiters 14 und der Empfänger 7 grenzen an den Messspalt 24 an und sind auf gegenüberliegenden Seiten des Messspaltes angeordnet, so dass der Empfänger 7 mit Licht aus der Lichtquelle 6 beaufschlagt wird. Die Lichtstrecke 11 zwischen dem Ende 14A des Lichtwellenleiters 14 und dem Empfänger 7 durchquert den Messspalt 24.

Aufgrund der Anordnung des Fadenwächters 5 schneidet der Faden 4 die Lichtstrecke 11 bei jedem Changierhub. Die damit verbundene Unterbrechung des Lichtstrahls wird von der Auswerteinheit 12, die das Signal des Empfängers 7 auswertet, detektiert. Die Auswerteinheit 12 erfasst die zeitlichen Abstände und vergleicht diese mit einem Referenzwert. Der Referenzwert kann dabei aus der Changierfrequenz ermittelt werden. Es ist aber auch möglich, einen aktuellen zeitlichen Abstand der Unterbrechungen mit vorher ermittelten zeitlichen Abständen zu vergleichen. So kann zum Beispiel ein gleitender Mittelwert der zeitlichen Abstände als Referenzwert dienen. Wenn eine erwartete Unterbrechung ausbleibt, kann auf eine Fadenunterbrechung geschlossen werden.

Bei einer alternativen, nicht dargestellten Ausführungsform ist an der Position des Empfängers 7 der Fig. 3 eine Lichtquelle und an der Position der Lichtquelle 6 ein Empfänger angeordnet.

## Patentansprüche

1. Arbeitsstelle einer Textilmaschine, aufweisend
- eine Spuleinrichtung (1) zur Herstellung einer Kreuzspule (2) mit einer Fadenverlegeeinrichtung (3) zur changierenden Verlegung eines Fadens (4) auf einer in der Spuleinrichtung (1) befindlichen Kreuzspule (2),
- einen Fadenwächter (5), der zwei optoelektronische Bauteile (6, 7), von denen eines als Lichtquelle (6) und eines als lichtempfindlicher Empfänger (7) ausgebildet ist, aufweist und der das Vorhandensein des Fadens (4) an der Arbeitsstelle überwacht und so im Changierbereich (8) des Fadens (4) angeordnet ist, dass der changierende Faden (4) in einem Messspalt (24) eine Lichtstrecke (11) zwischen der Lichtquelle (6) und dem Empfänger (7) schneidet, und
- eine Auswerteeinheit (12) vorhanden ist, die die Unterbrechung der Lichtstrecke (11) durch den Faden (4) detektiert und anhand der wiederkehrenden Unterbrechung auf das Vorhandensein des Fadens (4) schließt,
**dadurch gekennzeichnet,**
**dass** die zwei optoelektronischen Bauteile (6, 7) auf einer Leiterkarte (13) angeordnet sind,
**dass** ein Lichtwellenleiter (14) vorhanden ist, der einen Lichtstrahl der Lichtquelle (6) in Richtung des Empfängers (7) umlenkt,
**dass** das erste Ende (14B) des Lichtwellenleiters (14) zur Übertragung eines Lichtstrahls an das erste optoelektronische Bauteil angrenzt und
**dass** das zweite Ende (14A) des Lichtwellenleiters (14) und das zweite optoelektronische Bauteil so an den Messspalt (24) angrenzen, dass ein Lichtstrahl zwischen dem zweiten Ende (14A) des Lichtwellenleiters (14) und dem zweiten optoelektronischen Bauteil durch den Messspalt (24) übertragen wird.

2. Arbeitsstelle einer Textilmaschine nach Anspruch 1, **dadurch gekennzeichnet, dass** die Lichtquelle (6) das erste optoelektronische Bauteil und der Empfänger (7) das zweite optoelektronische Bauteil bildet.

3. Arbeitsstelle einer Textilmaschine nach Anspruch 1, **dadurch gekennzeichnet, dass** der Empfänger das erste optoelektronische Bauteil und die Lichtquelle das zweite optoelektronische Bauteil bildet.

4. Arbeitsstelle einer Textilmaschine nach einem der vorherigen Ansprüche, **dadurch gekennzeichnet, dass** im Changierbereich (8) des Fadens ein Paraffineur (15) angeordnet ist und der Fadenwächter (5) mit dem Paraffineur (15) verbunden ist.

5. Fadenwächter (5) zur Überwachung des Vorhandenseins eines Fadens mit zwei optoelektronischen Bauteilen, von denen eines als Lichtquelle (6) und eines als lichtempfindlicher Empfänger (7) ausgebildet ist, **dadurch gekennzeichnet, dass** die Lichtquelle (6) und der Empfänger auf einer Leiterkarte angeordnet sind und dass ein Lichtwellenleiter (14) vorhanden ist, der einen Lichtstrahl der Lichtquelle (6) in Richtung des Empfängers (7) umlenkt,
dass das erste Ende (14B) des Lichtwellenleiters (14) zur Übertragung eines Lichtstrahls an das erste optoelektronische Bauteil angrenzt und
dass das zweite Ende (14A) des Lichtwellenleiters (14) und das zweite optoelektronische Bauteil so an einen Messspalt (24) des Fadenwächters angrenzen, dass ein Lichtstrahl zwischen dem zweiten Ende (14A) des Lichtwellenwellenleiters (14) und dem zweiten optoelektronischen Bauteil durch den Messspalt (24) übertragen wird.

6. Fadenwächter (5) nach Anspruch 5, **dadurch gekennzeichnet, dass** die Lichtquelle (6) das erste optoelektronische Bauteil und der Empfänger (7) das zweite optoelektronische Bauteil bildet.

7. Fadenwächter (5) nach Anspruch 5, **dadurch gekennzeichnet, dass** der Empfänger das erste optoelektronische Bauteil und die Lichtquelle das zweite optoelektronische Bauteil bildet.

8. Fadenwächter (5) nach einem der Ansprüche 5 bis 7, **dadurch gekennzeichnet, dass** der Fadenwächter (5) eine Auswerteeinheit (12) aufweist, die die Unterbrechung einer Lichtstrecke (11) zwischen Lichtquelle (6) und Empfänger (7) durch den Faden detektiert und anhand einer wiederkehrenden Unterbrechung auf das Vorhandensein des Fadens (4) schließt.
